# EUROPÄISCHE PATENTANMELDUNG

(11) **EP 2 902 226 A1**
(43) Veröffentlichungstag der Anmeldung: **05.08.2015**
(21) Anmeldenummer: 15151080.7
(22) Anmeldetag: 14.01.2015
(51) Int. Cl.: B60H 1/34, F24F 13/14

(54) **LAMELLE SOWIE LUFTAUSSTRÖMER**

(30) Priorität: 30.01.2014 DE 102014101145
(71) Anmelder: TRW Automotive Electronics & Components GmbH, 78315 Radolfzell (DE)
(72) Erfinder: Schlippe, Michael, 67659 Kaiserslautern (DE)
(74) Vertreter: Prinz & Partner mbB

(57) **Zusammenfassung**

Die vorliegende Erfindung betrifft eine Lamelle (10) für einen Luftausströmer (5), wobei die Lamelle (10) zumindest eine Stirnseite (12, 14) aufweist und wobei an der Stirnseite (12, 14) zumindest ein Einklipselement (16, 18) vorgesehen ist, mittels dessen die Lamelle (10) in den Luftausströmer (10) einklipsbar ist

Des Weiteren betrifft die vorliegende Erfindung einen Luftausströmer (5).

## Beschreibung

Die vorliegende Erfindung betrifft eine Lamelle für einen Luftausströmer sowie einen Luftausströmer.

Bei Luftausströmern für Kraftfahrzeuge sind zur Lenkung des durch den Luftausströmer ausströmenden Luftstroms in der Regel zwei Lamellenpakete hintereinander und senkrecht zueinander angeordnet.

Insbesondere die Lamellen im hinteren Bereich des Luftausströmers sind mittels separaten Haltestangen im Luftausströmergehäuse befestigt.

Ein Beispiel für einen derartigen Luftausströmer ist aus der DE 10 2011 120 915 A1 bekannt. Dieser Luftausströmer weist horizontal angeordnete vordere Lamellen (A-Lamellen) und im rückwärtigen Bereich vertikal angeordnete Lamellen (B-Lamellen) auf, die über Koppelelemente miteinander verbunden sind. Durch die Koppelelemente kann eine durch ein Bedienelement vorgegebene Schwenkbewegung der Lamellen erreicht werden, um den Luftstrom aus dem Luftausströmer auszurichten.

Diese Art der Befestigung kann jedoch dazu führen, dass im Betrieb ein Klappern der Lamellen auftreten kann. Diese Geräuschbildung wird als störend empfunden.

Es ist daher die Aufgabe der Erfindung, eine Lamelle und einen Luftausströmer der eingangs genannten Art in vorteilhafter Weise weiterzubilden, insbesondere dahingehend, dass ein geräuscharmer Betrieb des Luftausströmers und stabile Fixierung der Lamellen im Luftausströmergehäuse möglich wird.

Diese Aufgabe wird erfindungsgemäß gelöst durch eine Lamelle für einen Luftausströmer mit den Merkmalen des Anspruchs 1. Danach wird eine Lamelle für einen Luftausströmer bereitgestellt, wobei die Lamelle zumindest eine Stirnseite aufweist und wobei an der Stirnseite zumindest ein Einklipselement vorgesehen ist, mittels dessen die Lamelle in den Luftausströmer einklipsbar ist. Durch die Möglichkeit, die Lamelle im Luftausströmer einklipsen zu können, wird ein geräuscharmer Betrieb des Luftausströmers möglich. Des Weiteren sind durch das Einklipsen die Lamellen im Luftausströmer einfach und stabil befestigbar. Bei der Lamelle kann es sich um eine sogenannte B-Lamelle handeln. B-Lamellen sind die Lamellen, die im hinteren Bereich des Luftausströmers angeordnet sind, also auf der vom Fahrzeuginnenraum abgewandten Seite.

Des Weiteren kann vorgesehen sein, dass das Einklipselement einen Einklipsabschnitt mit im Wesentlichen zylindrischer Grundform aufweist, der sich an seinem von der Lamelle abgewandten Ende verbreitert. Die Verbreiterung des von der Lamelle abgewandten Endes des Einklipsabschnittes ermöglicht eine sichere und stabile Fixierung des Einklipselementes im Gehäuse des Luftausströmers.

Vorzugsweise ist vorgesehen, dass das Einklipselement zumindest teilweise pilzkopfförmig ausgebildet ist. Eine pilzkopfförmige Ausbildung des Einklipselementes ermöglicht eine einfache Fertigung. Darüber hinaus ermöglichen die abgerundeten Formen der pilzkopfförmigen Ausbildung des Einklipselementes ein einfaches Einklipsen des Einklipselementes in das Gehäuse des Luftausströmers, und der Kopf des Einklipselementes kann als mechanischer Anschlag in Längsrichtung dienen.

Vorteilhafterweise kann die Lamelle zwei Stirnseiten aufweisen, und es kann an beiden Stirnseiten jeweils ein Einklipselement vorgesehen sein. Dadurch werden die Lamellen sehr stabil im Gehäuse befestigt.

Vorzugsweise kann vorgesehen sein, dass die beiden Einklipselemente koaxial sind. Die Lamelle kann dann um die Einklipselemente im Gehäuse verschwenkt werden.

Vorzugsweise ist das Einklipselement einstückig an der Lamelle angeformt. Dadurch ergibt sich der Vorteil, dass die Fertigung der Lamelle einfach und kostengünstig möglich ist. Außerdem werden so im Luftausströmer nur sehr wenige bewegte Teile angeordnet. Dies verringert insgesamt die Neigung zur Geräuschbildung der Lamellen im Luftausströmer.

Vorteilhafterweise kann das Einklipselement einen Absatz aufweisen, der einen Einklipsstop definiert. Der Einklipsstop erlaubt eine eindeutige Montage der Lamelle im Gehäuse des Luftausströmers. Der Absatz kann auch direkt auf der Innenseite des Luftausströmergehäuses anliegen. Dadurch kann erreicht werden, dass die Lamelle nur relativ zum Luftausströmergehäuse verschwenkt werden kann. Eine Axialbewegung entlang der Verschwenkachse der Lamelle wird aber durch den Absatz verhindert. Dies vermindert wiederum die unerwünschte Geräuschbildung.

Insbesondere ist möglich, dass der Absatz sich an seinem von der Lamelle abgewandten Ende verbreitert. Der Absatz kann sich zwischen Stirnseite und Einklipselement befinden.

Beispielsweise kann vorgesehen sein, dass der Absatz zumindest teilweise pilzkopfförmig ausgebildet ist. Die abgerundeten Formen der pilzkopfförmigen Ausformung erlauben ein einfaches Einklipsen und einen sicheren Halt z.B. in den im Luftausströmergehäuse vorgesehenen Öffnungen.

Außerdem betrifft die vorliegende Erfindung einen Luftausströmer. Danach weist ein Luftausströmer wenigstens eine erfindungsgemäße Lamelle auf. Insbesondere können sämtliche vorgenannten Merkmale und Vorteile der vorstehend beschriebenen Lamelle und der möglichen Ausführungsbeispiele hierzu verwirklicht werden.

Weitere Merkmale und Vorteile der Erfindung ergeben sich aus der nachfolgenden Beschreibung und aus der nachfolgenden Zeichnung, auf die Bezug genommen wird. In den Figuren zeigen:
- Figur 1 eine perspektivische Ansicht auf ein erfindungsgemäßes Ausführungsbeispiel eines Luftausströmers mit einem Ausführungsbeispiel erfindungsgemäßer Lamellen;
- Figur 2 eine perspektivische Detail-Ansicht auf den Luftausströmer gemäß Figur 1; und
- Figur 3 eine Seitenansicht auf ein Ausführungsbeispiel einer erfindungsgemäßen Lamelle.

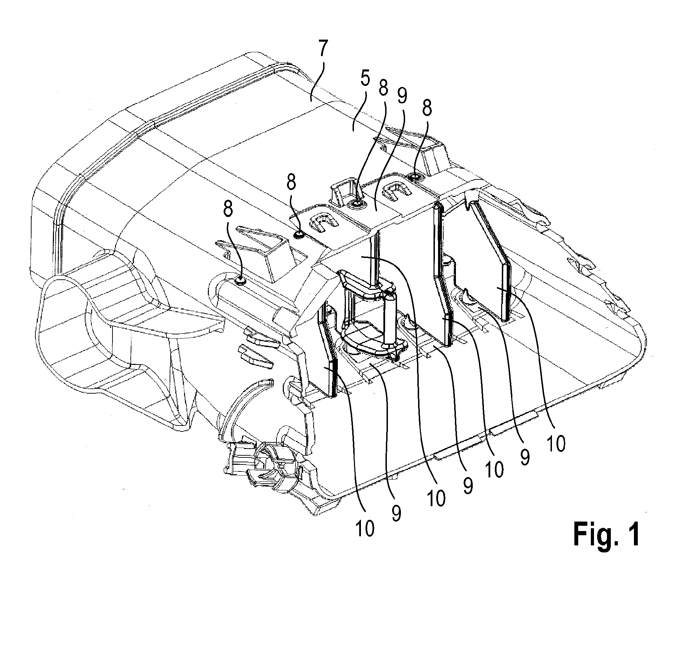

Figur 1 zeigt in perspektivischer Ansicht einen erfindungsgemäßen Luftausströmer 5.

Der Luftausströmer 5 weist ein Luftausströmergehäuse 7. Im gezeigten Luftausströmergehäuse 7 sind hintere Lamellen 10 angeordnet. Diese Lamellen werden auch B-Lamellen genannt. Der zweite Satz von Lamellen, also die auf der dem Fahrzeuginnenraum zugewandten Seite angeordneten sogenannten A-Lamellen, sind hier nicht dargestellt.

Das Luftausströmergehäuse 7 weist mehrere Öffnungen 8 auf, in die die Lamellen 10 eingesetzt sind. Die Öffnungen 8 befinden sich im Wesentlichen mittig in Einsetzbereichen 9, die im Gegensatz zu den übrigen Bereichen der Innenseite des Luftausströmergehäuses 7 eine geringere Wandstärke aufweisen.

Die Einsetzbereiche 9 sind in der Draufsicht betrachtet im Wesentlichen U-förmige Bereiche auf der Innenseite des Luftausströmergehäuses.

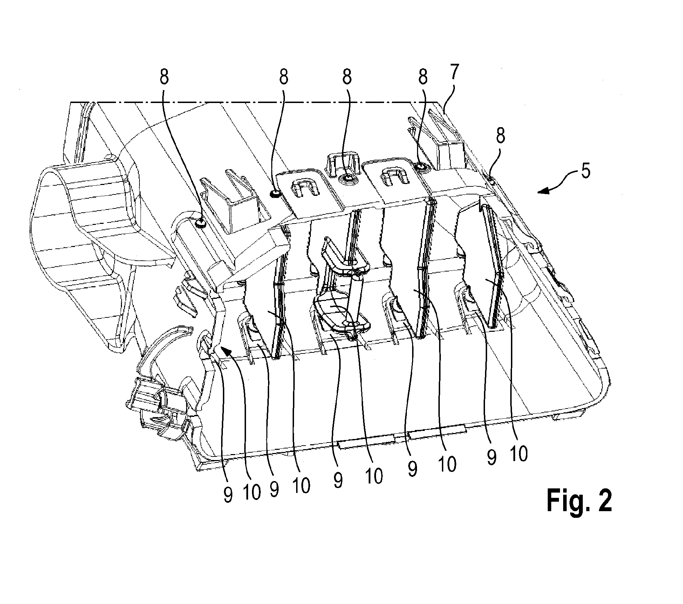

Das Luftausströmergehäuse 7 besteht üblicherweise aus einem thermoplastischen Material. Figur 2 zeigt weitere perspektivische Ansicht auf den Luftausströmer 5.

Im Luftausströmer 5 sind fünf Lamellen 10 angeordnet, wobei eine Lamelle 10 durch das Luftausströmergehäuse 10 in dieser Perspektive im Wesentlichen verdeckt ist.

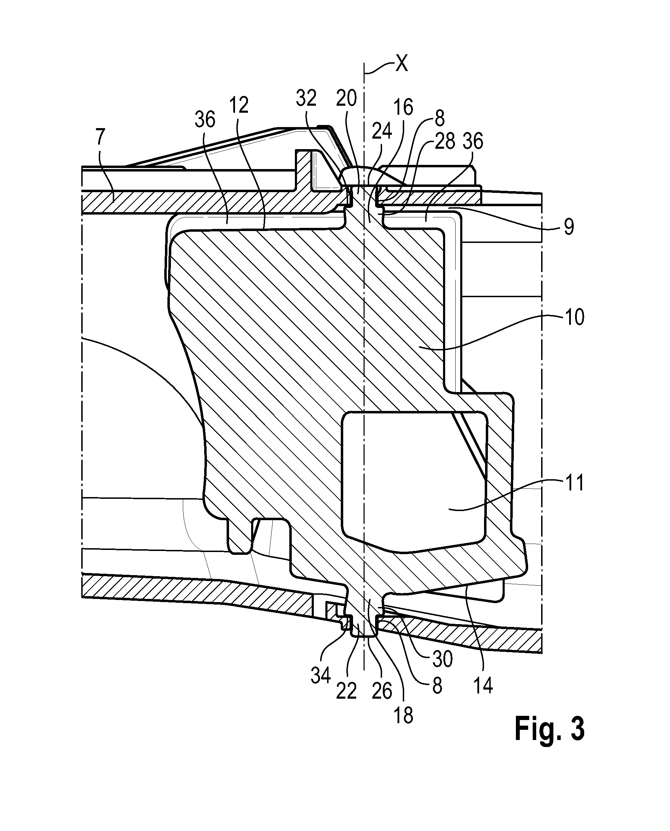

Figur 3 zeigt die mittlere Lamelle 10 aus dem Luftausströmer 5 gemäß Figur 1 und 2.

Die Lamelle 10 weist zwei Stirnseiten 12, 14 auf. Auf jeder Stirnseite 12, 14 ist jeweils ein Einklipselement 16, 18 vorgesehen.

Die Einklipselemente 16, 18 sind identisch ausgebildet.

In der Lamelle 10 ist auch ein Fenster 11 vorgesehen.

Die Einklipselemente 16, 18 weisen Einklipsabschnitte 20, 22. Die Einklipsabschnitte 20, 22 weisen eine im Wesentlichen zylindrische Grundform auf, die sich an seinem von den jeweiligen Stirnseiten 12, 14 der Lamelle 10 abgewandten Ende 24, 26 verbreitert.

Die Enden 24, 26 der Einklipsabschnitte 20, 22 sind pilzkopfförmig ausgebildet und abgerundet.

Zwischen den Enden 24, 26 und den jeweiligen Stirnseiten 12, 14 weisen die Einklipselemente 16, 18 jeweils einen Absatz 28, 30 auf, der einen Einklipsstop definiert.

Der Absatz 28, 30 weist eine Auflagefläche 32, 34 auf, die dafür vorgesehen ist, am Rand der Öffnungen 8 des Luftausströmergehäuses 7 anzuliegen.

Der Absatz 28, 30 verbreitert sich an seinem von der Lamelle 10 abgewandten Ende.

Die Absätze 28, 30 sind zudem pilzkopfförmig ausgebildet, wobei sich aus dem oberen Bereich des Absatzes 28, 30 jeweils der Einklipsabschnitt 20 bzw. 22 heraus ausbildet.

Die beiden Einklipselemente 16, 18 sind koaxial und einstückig an der Lamelle angeformt.

An der Stirnseite 18 der Lamelle ist weiter eine Dichtlippe 32 vorgesehen, die den Spalt zwischen Lamelle 10 und dem Luftausströmergehäuse 7 abdichtet. Die Dichtlippe 36 ist aus einem elastischen Material ausgebildet und weist eine vergleichsweise gute Gleiteigenschaft auf, so dass sie auf der Oberfläche der Innenseite des Luftausströmergehäuses 7 gleiten kann.

Die Montage der Lamellen 10 im Luftausströmer 5 erfolgt folgendermaßen:
Die Lamellen 10 werden in den Luftausströmer 5 eingeschoben und dann in den entsprechend dafür vorgesehenen Öffnungen 8 einklipst. Hierzu wird der Luftausströmer 5 z.B. durch Zusammendrücken reversibel elastisch verformt, um das Einklipsen der Lamellen 10 zu ermöglichen.

Die Formgebung des Luftausströmergehäuses 7 erlaubt in gewissen Grenzen eine flexible und reversible Verformung. Diese sind ausreichend, um die Lamellen in das Luftausströmergehäuse 7 in die Öffnungen 8 einsetzen und einklipsen zu können. Dies wird auch durch die Einsetzbereiche 9 unterstützt, die die Einklipselemente zu den Öffnungen 8 hinführen und so das Einsetzen und Einklipsen erleichtern.

Die geringere Wandstärke der Einsetzbereiche 9 erlaubt noch einmal zusätzlich eine flexible und reversible Verformung, die für das Einsetzen der Lamellen 10 erforderlich ist.

Das Luftausströmergehäuse 7 und auch die Einsetzbereiche 9 weisen somit eine gewisse Elastizität auf, so dass das Luftausströmergehäuse 7 durch Zusammendrücken eine größere Höhe aufweist und dadurch die Lamellen 10 in die jeweiligen Öffnungen 8 eingesetzt werden können.

Die Verschwenkung im Arbeitsbetrieb des Luftausströmers 10 erfolgt dann folgendermaßen:
Die beiden Einklipselemente 16, 18 definieren eine Drehachse X, um die die Lamelle 10 verschwenkt werden kann. Über nicht näher gezeigte Koppelelemente kann die Verschwenkbewegung durch ein Bedienelement vorgegeben werden.

Durch die Einklipselemente 16 und 18 sowie durch die Dichtlippe 32 erfolgt die Verschwenkung der Lamelle 10 geräuscharm. Eine Auf-und-Ab-Bewegung der Lamelle 10, also eine Axialbewegung entlang der Drehachse X wird durch die Dichtlippe 36 und die Absätze 28, 30 verhindert.

## Patentansprüche

1. Lamelle (10) für einen Luftausströmer (5), wobei die Lamelle (10) zumindest eine Stirnseite (12, 14) aufweist und wobei an der Stirnseite (12, 14) zumindest ein Einklipselement (16, 18) vorgesehen ist, mittels dessen die Lamelle (10) in den Luftausströmer (5) einklipsbar ist.

2. Lamelle (10) nach Anspruch 1, **dadurch gekennzeichnet, dass** das Einklipselement (16, 18) einen Einklipsabschnitt (20, 22) mit im Wesentlichen zylindrischer Grundform aufweist, der sich an seinem von der Lamelle (10) abgewandten Ende verbreitert.

3. Lamelle (10) nach Anspruch 1 oder 2, **dadurch gekennzeichnet, dass** das Einklipselement (16, 18) zumindest teilweise pilzkopfförmig ausgebildet ist.

4. Lamelle (10) nach einem der vorhergehenden Ansprüche, **dadurch gekennzeichnet, dass** die Lamelle (10) zwei Stirnseiten (12, 14) aufweist und an beiden Stirnseiten (12, 14) jeweils ein Einklipselement (16, 18) vorgesehen ist.

5. Lamelle (10) nach Anspruch 4, **dadurch gekennzeichnet, dass** die beiden Einklipselemente (16, 18) koaxial sind.

6. Lamelle (10) nach einem der vorhergehenden Ansprüche, **dadurch gekennzeichnet, dass** das Einklipselement (16, 18) einstückig an der Lamelle (10) angeformt ist.

7. Lamelle (10) nach einem der vorhergehenden Ansprüche, **dadurch gekennzeichnet, dass** das Einklipselement (16, 18) einen Absatz (28, 30) aufweist, der einen Einklipsstop definiert.

8. Lamelle (10) nach Anspruch 7, **dadurch gekennzeichnet, dass** der Absatz (28, 30) sich an seinem von der Lamelle (10) abgewandten Ende verbreitert.

9. Lamelle (10) nach Anspruch 8, **dadurch gekennzeichnet, dass** der Absatz (28, 30) zumindest teilweise pilzkopfförmig ausgebildet ist.

10. Luftausströmer (5) mit wenigstens einer Lamelle (10) nach einem der vorhergehenden Ansprüche.
